# EUROPEAN PATENT APPLICATION

(11) **EP 3 511 896 A1**
(43) Date of publication of application: **17.07.2019**
(21) Application number: 18211693.9
(22) Date of filing: 11.12.2018
(51) Int. Cl.: G06Q 40/04, G06F 3/0484

(54) **UNIT TRADING SYSTEM**

(30) Priority: 12.12.2017 CN 201711319702
(71) Applicant: Xiaomin, Yuan, St Alhambra, CA 91801 (US)
(72) Inventor: Xiaomin, Yuan, St Alhambra, CA 91801 (US)
(74) Representative: Klunker IP Patentanwälte PartG mbB

(57) **Abstract**

Embodiments of the present disclosure relate to a unit trading system, comprising: a user management terminal and a background server, wherein the user management terminal comprises: a display module including a Price zone and a Trend zone arranged in a column direction and a row direction, respectively, wherein a box-shaped trading order zone is provided at an intersection between each price in the Price zone, an Up setting zone, and a Down setting zone on a display interface; a trend determining module configured for monitoring a trading volume and a spread on the market so as to control, with the trading volume and the spread as pointers, a timing for submitting the trade.

## Description

### FIELD

Embodiments of the present disclosure generally relate to a tool for market quotation and entry trading, specifically relate to a unit trading system, and more particularly relate to a multi-entry based unit trading system.

### BACKGROUND

In the context of internationalization, marketization, and informatization, some businesses emerge: goods actioning, foreign exchange, and bulk stock exchange. With increase of trading varieties and speedup of the trading frequency, users need to conveniently acquire relevant market quotations and trading information, quickly set the amount and price of order placement, rapidly place orders, and obtain the status of a placed order, which boosts the emergence of relevant trading systems.

With foreign exchange as an example, foreign exchange has become one of the largest markets globally. According to incomplete statistics, the daily trading volume of foreign exchanges is about 5,000 billion USD, which surpasses the stock market. The information channels for the daily 5,000 billion USD scale of foreign exchange markets are almost the same. Many international banks, hedge funds, and insurance companies frequently trade foreign exchanges to earn money therefrom. Despite of their very large trading scale, their daily earnings and losses cannot cause even a very slight change in exchange rates. Just like the online stock exchange revolution emerging in 1990s, the Internet has made foreign exchange trading accessible to common people. Now, millions of traders throughout the world may trade foreign exchanges at home only with a computer, an Internet interface, and a trading account.

Foreign exchange trading is not only concerned with buy and sell. A successful deal is complicated. Besides finding a key entry point, a trader first needs to maintain his overall trading mode consistent, such that irrespective of fundamentals-based trading or technical-based trading, the trader can always have a relatively stable trading mode suitable for his own characteristics. With a stable trading mode, the trading efficiency will be greatly enhanced by finding a currency pair suitable for his own trading characteristics to trade. Finally, the trader needs also to carefully consider a close strategy to manage the positions to control risks.

Operations of the foreign exchange trading relies on trading software. A variety of trading software are available on the market. Hereinafter, two kinds of common trading software will be compared to analyze their functions. FXCM trading software has advantages of a fine interface, simplicity, and ease of use. However, its functions are relatively few. Besides viewing some data and account information, its basic functions are "buy," "sell," and very simple "entry." The functions of the entry interface of the FXCM trading software include buy/sell, amount, trading manner, and position limit, and the software has the following disadvantages: 1. It does not support multiple entries; 2. The logic of entry can only be based on prices; 3. Continuous entry cannot be set. For common people with tight time, a simple "entry" cannot satisfy the existing needs. The mt4 foreign exchange trading system introduces program codes with which a desired function may be written; although it may implement more functions, it is apparently beyond the capacity of one without several years of specialized educations on software and finance.

Further, all trading software on the market requires the user to set and prepare the trading and put it at the server of the exchange, and then the server sends it to the market for trading according to the settings of the user. This mode has a lower requirement on the terminal. The settings for a trade may be performed on a mobile phone or a tablet computer, because the calculation work is implemented at the server. However, this poses a security problem. The settings of the trade must be informed to the exchange in advance; under this design, the user's trade is disclosed in advance; if one makes statistics on the entry information underlying the market, theoretically he may effectively perform systematic arbitrage.

In view of the above, most trading software available on the market either only provides a simple single-entry system or provides a highly complicated multi-entry system that is beyond the capacity of an untrained person; the existing trading system requires informing the trade settings to the exchange in advance, which, although is simple and reliable, will expose the user to risks. Therefore, it is desired to provide a unit trading system that may lower the requirements on system trading while addressing trading security risks of the existing systems.

### SUMMARY

To overcome the drawbacks in the prior art, an object of the present disclosure is to provide a unit trading system that may lower requirements on system trading while addressing trading security risks of existing systems.

A technical solution of a unit trading system according to the present disclosure is provided below:
a unit trading system comprises: a user management terminal and a background server, the user management terminal and the background server being connected via a virtual interface, wherein the user management terminal comprises:
a display module including a Price zone and a Trend zone arranged in a column direction and a row direction, respectively, wherein the Trend zone includes a plurality of Up setting zones and a plurality of Down setting zones, and a box-shaped trade instruction setting zone is provided at an intersection between each price in the Price zone, an Up setting zone, and a Down setting zone on a display interface; and
a trend determining module configured for monitoring a trading volume and a spread on the market so as to controla timing for submitting the trade with the trading volume and the spread as pointers.

Preferably, the user management terminal includes a local trading center module, a smart caching module, and a local database, wherein a trading order is first processed by the local trading center module prior to submission to an exchange; when receiving the trading order submitted by a user, the local trading center module queries a data matching confidence state of the smart caching module; in the case that the smartly cached data is in a confidence state, it is unnecessary to query the server of the exchange, and the trading center submits the trading order to the exchange after correspondingly processing the smartly cached data; the smart caching module may infer data including an account balance, an available quota, or positions, which need the system to query at the exchange within a short time based on a system state; a local trading center module and a smart caching module may invoke data from a local database, and the local database stores data which are set on an operating interface and account-related data which are stored at the server of the exchange.

Preferably, the user management terminal includes a system logic operation module, the system logic operation module may execute steps of: obtaining the last market quote and the current market quote after accessing a chain trading platform, and comparing the last market quote and the current market quote; in the case that the current market quote is greater than the last market quote, executing an Up logic of the system and querying, in the system, the trading order set in the Up setting zone; in the case that an order is found, submitting the trade; in the case that no order is found, returning to the chain trading platform;
in the case that the current market quote is lower than the last market quote, determining whether to execute the Up logic of the current platform; in the case of executing the Up logic of the current platform, executing a Down logic in the system and querying, in the system, a trading order set in the Down setting zone; in the case of finding an order, submitting the trade; in the case that no order is found, returning to the chain trading platform.

Preferably, the trend determining module is further configured for monitoring a fluctuation trend and a trading traffic on the market; the fluctuation trend, the trading traffic, the trading volume, and the spread are jointly used as the pointers for submitting the trade.

Preferably, the trending zone further includes a Box example zone provided with reference examples.

Preferably, the user management terminal further comprises a market drastic fluctuation processing module that merges blank orders without time to trade into one order to submit.

Preferably, the user management terminal further includes an instruction execution control module, in which an instruction antecedent may be set, the instruction antecedent referring to a previous up trend or down trend, or a fluctuation being greater or lower than a predetermined value.

Preferably, the display module further comprises a bookmark for switching a trade setting interface.

Preferably, the unit trading system has a continuous trade instruction setting zone.

Preferably, in the display module, each Up setting zone corresponds to a column of trade instruction setting zones, and each Down setting zone corresponds to a column of trade instruction setting zones.

Preferably, the Price zone includes numerical values at an interval of identical point differences.

Preferably, the trading system is applied to a circumstance of computer online trading, including, but not limited to, foreign exchange, stock exchange, commodity exchange, futures exchange, gold exchange, or oil exchange.

Preferably, the database of the trading system is stored at a user end.

Implementation of the present disclosure includes the following technical effects:

The unit trading system of the present disclosure is a multi-entry based unit trading system, where an operation interface of the trading system is represented with a binary spreadsheet. An advantage thereof is that the spreadsheet is a common language for most users, such that the users may easily understand the basic elements of such an interface. The trading system of the present disclosure supports multiple entries, which simplifies the operation and lowers the requirements on operators, where the operations may be performed with a simple and intuitive binary spreadsheet interface.

Another advantage of the present disclosure is to compress and simplify the time axis with an unlimited length. The existing trading system displays the up and down trends transversely over time; such a system can only display the up and down trends over a small segment of time on the entire interface. An innovative contribution of the present disclosure is to display each of the Up setting zones or Down setting zones in the longitudinal direction, such that the trend chart with unlimited length is compressed to a spreadsheet interface with an acceptable size, which simplifies the display interface and increases the displayable content.

By providing the trend determining module, it becomes unnecessary to send a preset trade instruction to a server of the exchange, which addresses the issue of queue priority and also solves the issues relating to trading security.

### BRIEF DESCRIPTION OF THE DRAWINGS

Fig. 1 shows a schematic diagram of an overall structure of a unit trading system according to example 1 of the present disclosure;
Fig. 2 shows a schematic diagram of a user management terminal display interface of the unit trading system according to example 1 of the present disclosure;
Fig. 3 shows a schematic diagram of a trade processing flow of the unit trading system according to example 1 of the present disclosure;
Fig. 4 shows a schematic diagram of a data synchronization confidence verification flow of the unit trading system according to example 2 of the present disclosure;
Fig. 5 shows a flow schematic diagram of a system logic operation module of the unit trading system according to example 2 of the present disclosure; and
Fig. 6 shows a flow schematic diagram of a local trading center during futures trading.

1. Price zone; 2. Trend zone; 20. Up setting zone; 21. Down setting zone; 22. Box example zone; 3. Bookmark; 4. Trading instruction setting zone; 5. Function layout zone.

### DETAILED DESCRIPTION OF EMBODIMENTS

Hereinafter, the present disclosure will be described in detail with reference to the embodiments and the drawings. It needs to be noted that the embodiments described herein are only intended to facilitate understanding of the present disclosure, rather than limiting the present disclosure.

### Embodiment 1

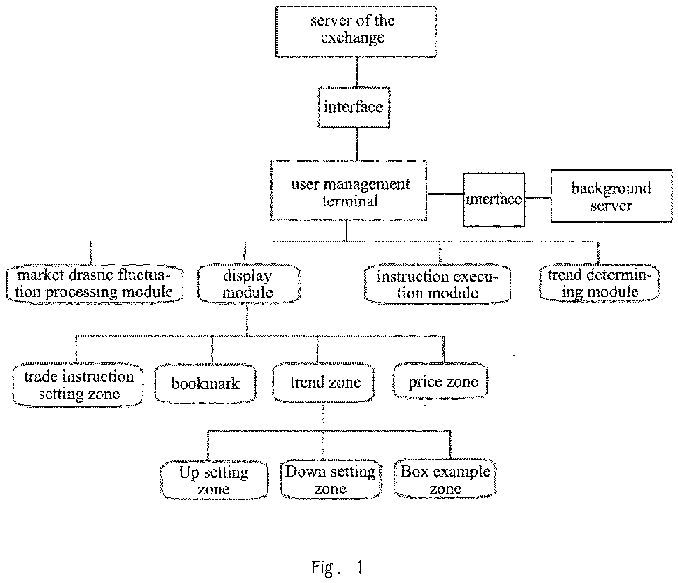

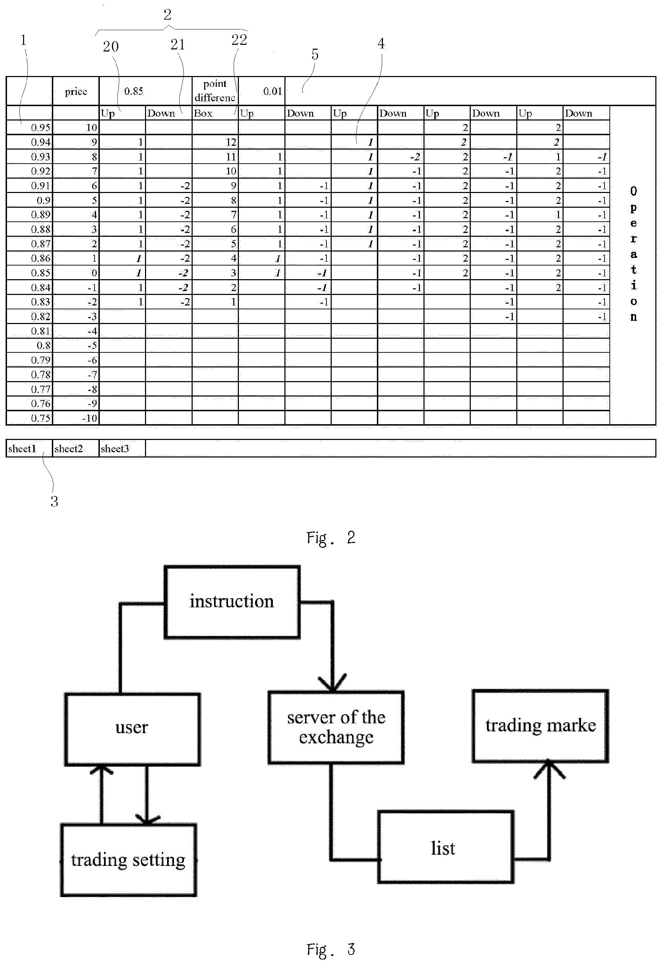

As shown in Fig. 1, a unit trading system provided by this embodiment is a multi-entry based unit trading system, comprising: a user management terminal (front end) and a background end, where the background end includes a background server, the user management terminal and the background server being connected via a virtual interface; the background server is a virtual device that runs at the client locally in a virtual manner to provide background services. The user management terminal is connected with a server of the exchange via an interface; the user management terminal is configured for handling works such as displaying images and communicating with the server of the exchange; the user management terminal includes a display module, a trend determining module, a market drastic fluctuation processing module, and an instruction execution controlling module. As shown in Figs. 1 and 2, the display module comprises a Price zone 1 and a Trend zone 2 arranged in a column direction and a row direction, respectively. In this embodiment, the Price zone 1 is arranged in the column direction, and the Trend zone 2 is arranged in a row direction. The Trend zone 2 comprises a plurality of Up setting zones 20 (Up Trend zones), a plurality of Down setting zones 21 (Down Trend zones), and a Box example zone 22. The Box example zone 22 only plays a reference role. A box-shaped trade instruction setting zone 4 is provided at an intersection between each price in the Price zone 1, the Up setting zone 20 (Up Trend zone), and the Down setting zone 21 (Down Trend zone) on a display interface; in the display module, each Up setting zone 20 corresponds to a column of trade instruction setting zones 4, and each Down setting zone corresponds to a column of trade instruction setting zones 4. The Price zone includes numerical values at an interval of identical point differences, e.g., at an interval of 0.01 exchange rate difference. The display module may also be provided with a function setting zone 5 in which prices and point differences may be set and other functions may also be arranged. Trading setting refers to inputting a buy instruction or a sell instruction in the trade instruction setting zone 4. The point difference refers to a difference between neighboring numerical values in the Price zone 1.

The entry system according to this embodiment has a continuous trade instruction setting zone 4, where hierarchical and continuous multiple entries may be set. To fill the trade instruction setting zone 4 in the display module, a positive number indicates buy and a negative number indicates sell (a plurality of standard lots used in trading). With foreign exchange trading as an example, in the case of an Up trend, a currency pair of a plurality of standard lots bought at a previous price are automatically sold to hedge at a next price, so as to lock local profits in a quantum manner; likewise, in the case of Down trend, the currency pair of a plurality of standard lots sold at the preceding price is automatically bought to hedge at the next price, so as to lock local profits in a quantum manner.

As another key point in this embodiment, the trend determining module is configured for monitoring a trading volume and a spread on the market so as to control a timing for submitting the trade (i.e., controlling when to submit the trade) with the trading volume and the spread as pointers. The spread refers to a difference between a sell price on the market and the quote set for "buy" when a "buy" trading is set, or a difference between the buy price on the market and the set "sell" price when a "sell" trading is set. The trend determining module may also be configured for monitoring a fluctuation trend and a trading traffic on the market with the fluctuation trend and the trading traffic as pointers. The fluctuation trend refers to a price fluctuation trend on the trading market within a certain period of time, and the trading traffic refers to a total trading volume on the trading market within a certain time. By providing the trend determining module, the trading system according to this embodiment needn't send a preset trading instruction to the server of the exchange. As shown in Fig. 3, the trading architecture is that the user performs trading setting at a user management terminal, the user management terminal acquires monitoring data (e.g., trading volume and spread) from the server of the exchange based on the preset trading order, and then releases a trading list on the trading market to trade from time to time based on the monitoring result.

The unit trading system of the present disclosure presents an operation interface of the trading system with a binary spreadsheet. An advantage thereof is that the spreadsheet is a common language for most users, such that the users may easily understand the basic elements of such an interface. The trading system of the present disclosure supports multiple entries, which simplifies the operations and lowers the requirements on operators, where the operations may be performed with a simple and intuitive binary spreadsheet interface.

Its working principle is that centered with a certain price, the fluctuation may be up or down or flat based on fluctuation possibilities. A subsequent up fluctuation may be either continuing up or turning down, and a down fluctuation may be continuing down or turning up. With a forward direction as an example, if the current price is N, the trading center may rise from N to N+X, and meanwhile, at any point in the up trend, it may turn to the down trend (N+X-Y). On the premises of this logic, an instrument interface (trade instruction setting zone 4) is extended from the trading system of the present disclosure, and the user is only needed to input a trading instruction at a corresponding trading instruction setting zone in the instrument interface, and then as long as a trading price involved is triggered over time (the foreign exchange market operates the whole day), the trading will be automatically submitted to the banker to trade at the market quotation, and the system will work as instructed by the user, thereby solving the problem that the user previously had to monitor and operate for a long time.

Another advantage of the present disclosure is to compress and simplify the time axis with an unlimited length. The existing trading system displays the up and down trends transversely over time; such a system can only display the up and down trends over a small segment of time on the entire interface. An innovative contribution of the present disclosure is to display each of the Up trend or Down trend in the longitudinal direction, such that the trend chart with unlimited length is compressed to a spreadsheet interface with an acceptable size, which simplifies the display interface and increases the displayable content.

The box example zone 22 in the Trend zone plays a role of reference example (e.g., a setting example automatically set by the system) to facilitate the user to inspect the setting and operating status of each instruction zone in a more efficient way.

Preferably, the user management terminal further comprises a market drastic fluctuation processing module (jump out mechanism). If the market drastic fluctuation causes a bid set by a trading instruction to jump out a far distance, or the market bid during the foreign exchange process changes (the foreign exchange process generally lasts 0.2s-2s), then the market drastic fluctuation processing module will merge blank orders without time to trade into one order to submit.

Preferably, the user management terminal further includes an instruction execution control module, in which an instruction antecedent may be set. The instruction antecedent may refer to a previous up trend or a down trend, or a fluctuation being greater or lower than a predetermined value, e.g., it may be set to execute a second group of instructions when the fluctuation is greater than 25%. In this way, the trading system of the present disclosure has a sequence logic. The multiple entry engineering considers an instruction antecedent and a subsequence mechanism. Each instruction will generate a corresponding subsequent instruction zone, causing a trade instruction to generate unlimited changes and possibilities.

The display module further comprises a bookmark 3. The bookmark 3 is like the sheet1, sheet2, and sheet3 shown in Fig. 2. The user may simultaneously set multiple groups of trades to be saved as sheet1, sheet2, and sheet3. The bookmark 3 has two functions: a continuous entry function, which, put it simply, means immediately processing sheet2 after sheet1 is done; and dividing a relatively long entry analysis into a plurality of small entries to process, thereby alleviating the burden of the device. The user may extract a trading setting stored in the system (which may be a trading setting for a past trading or a trading setting specifically saved in a trading setting library) and apply it to the continuous trading sheet. A trading setting string may also be saved to facilitate the user to view the trading condition.

In this example, an operation process will be illustrated in detail with Fig. 2 as an example. The user may pre-set a buy or sell instruction (e.g., -2, -1, 1, 2 in Fig. 2) in the trade instruction setting zone 4, and then the trading system will automatically operate based on an actual trend. The actual trend in Fig. 2 is starting at 0.85, rising to 0.86, then falling to 0.84, and then rising to 0.86, further falling to 0.84, and then abruptly rising to 0.87, continuing to rise to 0.94, then falling to 0.93, and further rising to 0.94, and then falling to 0.93, rising to 0.94, and then falling to 0.93. During this period, the trading system automatically makes trading based on the instructions in the trade instruction setting zone 4. It needs to be noted that the issue of jump out mechanism is involved when abruptly rising from 0.84 to 0.87, i.e., the market drastic fluctuation causes the bid set by the trade instruction to jump out a far distance. In this case, the market drastic fluctuation processing module merges several blank orders without time to trade into one order to be submitted for trading.

The fluctuation possibility-based working principle in this embodiment will be further illustrated with foreign exchange as an example:

As shown in Table 1, there are three possibilities underlying a bid X: up, down, and flat. It is supposed that X is at the position of 0 at time T1 and X may go to any position at T2, which will be illustrated through Table 2.

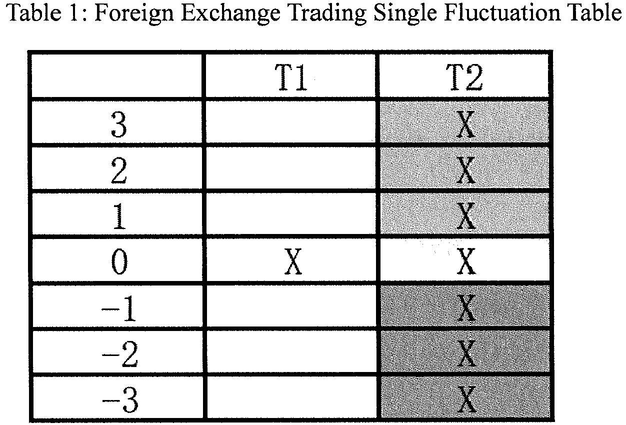

In Table 2, T2 indicates that X at T1 may go to any position, expressed by X1, X2, X3 ...; T3A represents a next change of X1 at T2; T3B represents a next change of X2 at T2, and so forth. But at T3, many possibilities are developed; at T4, it will be difficult to display all of the possibilities, needless to mention operating. Therefore, it is desirable to contemplate a method to recombine the cells so as to put as more time points as possible using the shortest X axis.

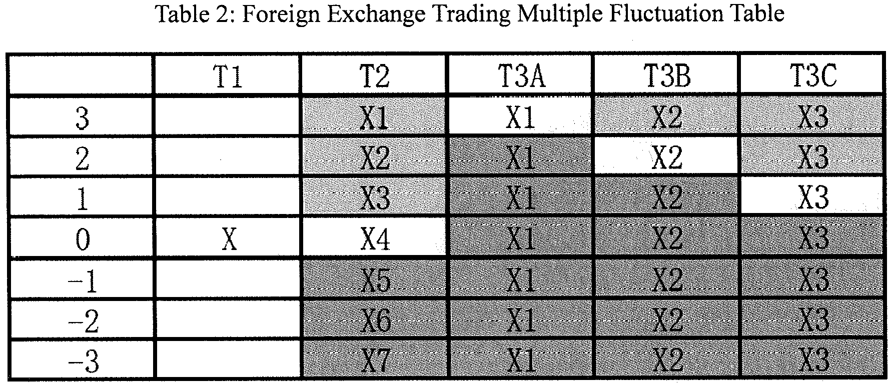

To solve the technical problem above, this embodiment arranges the possibilities (Up trend or Down trend) of the same direction on a Y axis; this arrangement will not cause the X-axis of the interface to move when the bid trend does not change, which greatly reduces use of the interface, thereby reducing the display interface. As shown in Table 3, X rises from point 0 to point 2 and then turns to a down trend to point -1; in this way, each Up trend or Down trend is expressed in a column of cells. In this way, the input layout issue may be solved. This may also reduce the use threshold of the system trading.

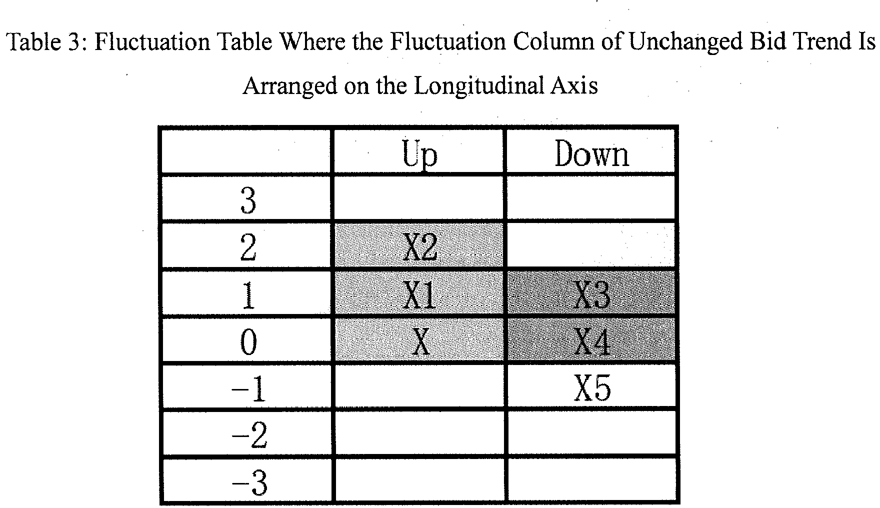

Besides the setting issue, the unlimited possibilities of the fluctuation also have a display issue. When the information amount displayed in one interface is large enough, it is impossible for the user to effectively view the contents of the information. To this end, we devise two tools to solve the display issue.

First, each generated instruction zone is changed into a bookmark3, such that the user may conveniently perform corresponding settings according to each instruction zone, and the whole zone may also be set using the input assistant tool mentioned above.

Second, a Box example zone 22 is generated for each instruction zone to facilitate the user to inspect the setting and operation conditions of each instruction zone more efficiently. Note: All boxes are used for reference and not involved with actual operations.

Due to a trading queue issue, the existing trading system needs to hand the trading setting to the server of the exchange, which brings security risks. To facilitate understanding of the trading queue issue, a trading process is first introduced.

**Table 4: Statistical Table of Buy and Sell in Trading Queue**

| AC | HOLD | BID | | ASK | SHORT | AC |
|---|---|---|---|---|---|---|
| A | 10 | 89 | | 90 | 20 | Q |
| S | 10 | 89 | | 89 | 20 | W |
| D | 30 | 89 | | 89 | 10 | E |
| F | 1 | 89 | | 89 | 10 | R |

Table 4 displays asks and bids of a plurality of buyers and sellers; the exchange will gather the trades on the market to pair. With Table 4 as an example, 4 bids 89 to buy 51 orders, and 60 orders are sold at an approximate price, which are distributed in the following manner (supposing the setting is +/-1).
A will buy 10 orders of R at 88;
S will buy 10 orders of E at 89;
D will buy 20 orders of W at 89, and buy 10 orders of Q at 90;
P will buy 1 order of Q at 90;
Q still holds 9 orders not sold out on the market.

It is seen that queuing in front is favorable. If the trading setting is placed to the server of the exchange in advance, a higher priority will be obtained; queuing upon reaching the price will lose the advantage.

To solve the technical problem, the present disclosure devises a trend determining module configured for monitoring a trading volume and a spread on the market so as to control a timing for submitting the trade with the trading volume and the spread as pointers. In this way, the queuing priority issue and the trading security issue are both solved.

Table 4 shows another example of using the trading system of the present disclosure. If one intends to buy 1 order at 90, the trading is only submitted to the trading server at the price of 90; however, if he intends to buy 1 order at 89, he should place the trading to the server earlier. Simply speaking, the trading system will submit the order at the final most favorable position. After solving the queue issue, a contemplation of placing the setting at the client may be implemented. This forms the trading architecture as shown in Fig. 3.

The unit trading system according to the embodiment above is particularly suitable for trading stock exchanges, commodity exchanges, futures exchanges, gold exchanges or oil exchanges on the Internet.

### Embodiment 2

A user management terminal includes a local trading center module, a smart caching module, and a local database, wherein a trading order is first processed by the local trading center module before being submitted to an exchange; when receiving the trading order submitted by a user, the local trading center module queries a data matching confidence state of the smart caching module; in the case that the smartly cached data is in a confidence state, it is unnecessary to query the server of the exchange, and the trading center submits the trading order to the exchange after performing relevant processing with the smartly cached data. The smart caching module may infer data including an account balance, an available quota, or a position that need to be queried by the system at the exchange within a short time based on a system state; This reduces the times of repetitive and real-time queries to thereby enhance the trading efficiency and guarantee synchronization between the local data and the data at the exchange. The local trading center module and the smart caching module may invoke data from a local database, and the local database stores data that are set on the operating interface and account-related data that are stored at the server of the exchange.

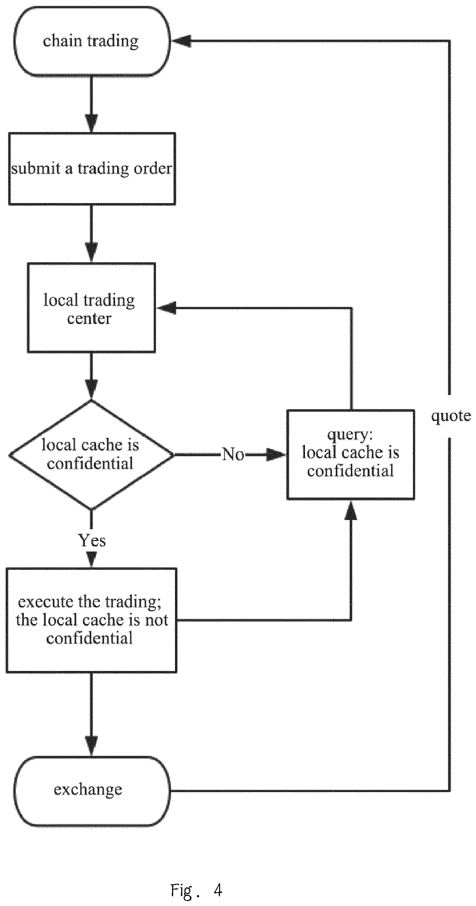

As shown in Fig. 4, to guarantee the synchronization between the local data and the data at the exchange, the smart caching module will execute a trading statement confidence verification step. Under this mechanism, each time when the system executes an action that will influence the positions of the account, the smart caching module will declare that the local caching and the exchange might be asynchronous, and the trading module will autonomously query the exchange; after one cycle is completed, the system will autonomously make a query to guarantee that the local caching at the next trading is confident. The chain trading refers to a continuous order chain CoC, an underlying logic of which is to support a continuous entry chain with a causal relationship; in the representation manner in Fig. 2, numerical values may be filled continuously in the Up setting zones 20 and the Down setting zones 21, and the system may continuously perform the chain trading based on trading settings.

The database of the trading system is stored at the user end. A user of a conventional trading system is only responsible for submitting data; access and trigger of the main trading entry data are both occurring at the server of the exchange. Such a practice has an advantage that the whole operation is less demanding on the computing capacity, network, and access speed of the user end.

However, as all operations occur at the server of the exchange, the user needs multiple accesses to complete modification of one entry, which cannot effectively modify the trading settings in a constantly changing circumstance.

For the same reason, as all operations occur at the server of the exchange, the exchange cannot provide a strong computation capability to each user to implement functions such as quantized transaction and AI takeover, etc.

Because all data and operations are placed at the server of the exchange, the confidentiality can only rely on legal restrictions and ethical restrictions; since the exchange has full capacity to know the entry conditions, it may infer the market trend.

In the present disclosure, the database of the system is stored at the user end, such that the user may process entry data more flexibly, causing the entire system to be more adaptable.

With an example of modifying a piece of entry setting record, the trading system of the present disclosure is only needed to modify it directly at the local database, and the whole modification process only involves access and data verification. In contrast, the conventional trading system has to perform a series of background tasks including data verification, data retrieval, back-forth network transfer, data verification, rights verification update, and update confirmation, etc.

A single data modification will have so many task sequences, and a large amount of real-time data flow is needed to realize AI takeover. A traditional trading system is not eligible for AI takeover. This is not the issue of the AI algorithm; instead, when the AI works out the result, an issue of how to apply the data to the trading system arises.

The effective timing of the data in the trading is very transient, and it is impractical to transfer the trading setting back and forth over the network; besides, such a problem cannot be solved with a broader bandwidth. This is caused by a bilateral response mechanism. The modern network technology can only solve these problems at the theoretical level.

On the other hand, these data have a huge volume. Without an efficient login mechanism at both ends, an ideal effect cannot be achieved even ignoring the network response issue. Besides, by providing the database at the user end, a higher confidentiality is provided.

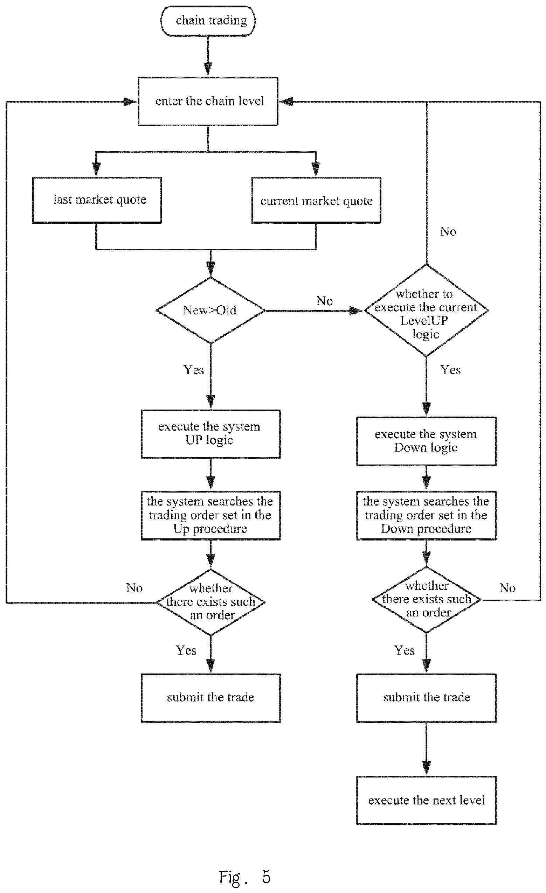

The unit trading system of this embodiment will be further illustrated with futures exchange as an example. The existing display method of futures exchange is a logical tree diagram. It has an advantage of clarity and understandability, but has disadvantages such as a wide display interface, which is unable to display with focus. With the fluctuation possibility, the present disclosure simplifies the tree diagram into an Up/Down diagram to solve the problem that the tree diagram occupies a large display space. The intuitiveness of the diagram is optimized with PRICE as the Y-axis, which solves the input problem of PRICE in the 3 key data (PRICE, AMOUNT, and ACTION). In conjunction with data such as positions in the database, the three operations of ASK, BID, and CLOSE are simplified into a +/- binary operation to solve the input issue of ACTION in the 3 key data (ASK, BID, CLOSE). In this way, setting of the quantized trading interface may be implemented using the +/- amount shown in Fig. 2. To let the system know the current position and the next action to be executed, the unit trading system of this embodiment includes a system logic operation module; as shown in Fig. 5, the system logic operation module may execute steps of: obtaining the last market quote and the current market quote after accessing a chain trading platform, and comparing the last market quote and the current market quote; in the case that the current market quote is greater than the last market quote, executing an Up logic of the system and querying, in the system, the trading order set in the Up setting zone; in the case that an order is found, submitting the trade; in the case that no order is found, returning to the chain trading platform;

in the case that the current market quote is lower than the last market quote, determining whether to execute the Up logic of the current platform; in the case of executing the Up logic of the current platform, executing a Down logic in the system and querying, in the system, a trading order set in the Down setting zone; in the case of finding an order, submitting the trade; in the case that no order is found, returning to the chain trading platform.

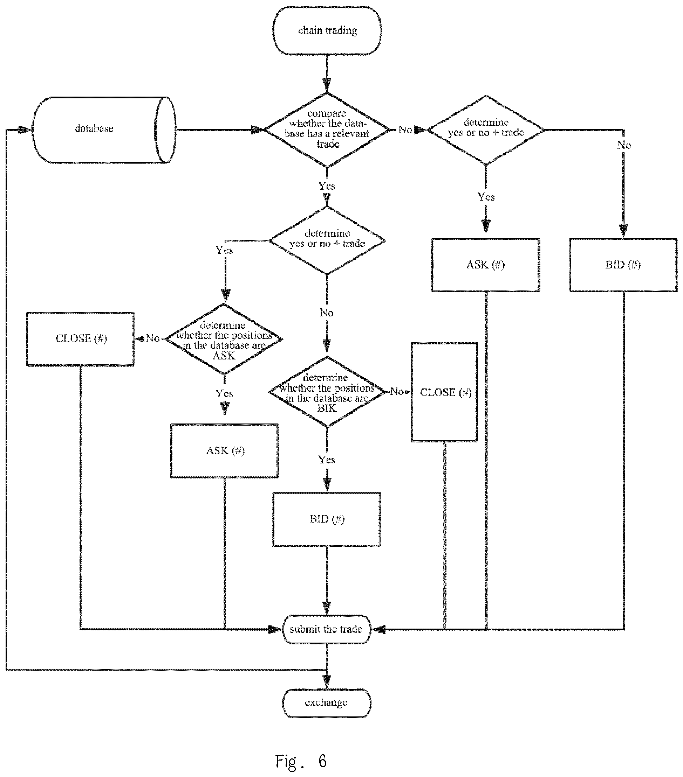

Continuing with the futures as an example, as shown in Fig. 6, all tradings will be processed at the local trading center before submitting to the exchange, so as to compare the currently submitted trading with the account position, thereby working out a correct operation.

The functional scope of a conventional entry instrument is not hierarchical, and associations can only be set with certain conditions. The COC trading module according to the present disclosure may control the whole trading situation more effectively by setting logically associated entries. Because the Price becomes the Y axis of the sheet, setting and displaying of prices may all be removed from the settings, causing the entire procedure of setting and management more intuitive and effective.

The unit system of the present disclosure has the following advantages over the conventional trading system:
1. The chain trading manner provides hierarchical and logic trading functions.
2. The quantization transaction window provides intuitive and efficient data input and management functions.
3. The localized data provides a confidential, efficient, and flexible automatic trading foundation.

Finally, it should be noted that the embodiments above are only used for illustrating the technical solution of the present disclosure, not to limit the protection scope of the present disclosure. although the present disclosure has been described in detail with reference to the preferred embodiments, those of normal skill in the art should understand that the technical solution of the present disclosure may be modified or equivalently substituted without departing from the essence and scope of the technical solution of the present disclosure.

## Claims

1. A unit trading system, comprising: a user management terminal and a background server, the user management terminal and the background server being connected via a virtual interface, wherein the user management terminal comprises:
a display module including a Price zone and a Trend zone arranged in a column direction and a row direction, respectively, wherein the Trend zone includes a plurality of Up setting zones and a plurality of Down setting zones, and a box-shaped trading order zone is provided at an intersection between each price in the Price zone, an Up setting zone, and a Down setting zone on a display interface; and
a trend determining module configured for monitoring a trading volume and a spread on the market so as to control a timing for submitting the trade with the trading volume and the spread as pointers.

2. The unit trading system according to claim 1, wherein the user management terminal includes a local trading center module, a smart caching module, and a local database, wherein a trading order is first processed by the local trading center module before being submitted to an exchange; when receiving the trading order submitted by a user, the local trading center module queries a data matching confidence state of the smart caching module; in the case that the smartly cached data is in a confidence state, it is unnecessary to query the server of the exchange, and the trading center submits the trading order to the exchange after performing relevant processing with the smartly cached data; the smart caching module may infer data including an account balance, an available quota, or a position information that need to be queried by the system at the exchange within a short time based on a system state; a local trading center module and a smart caching module may invoke data from a local database, and the local database stores data that are set on an operating interface and account-related data that are stored at the server of the exchange.

3. The unit trading system according to claim 2, wherein the user management terminal includes a system logic operation module, the system logic operation module may execute steps of: obtaining the last market quote and the current market quote after accessing a chain trading platform, and comparing the last market quote and the current market quote; in the case that the current market quote is greater than the last market quote, executing an Up logic of the system and querying, in the system, the trading order set in the Up setting zone; in the case that an order is found, submitting the trade; in the case that no order is found, returning to the chain trading platform;
in the case that the current market quote is lower than the last market quote, determining whether to execute the Up logic of the current platform; in the case of executing the Up logic of the current platform, executing a Down logic in the system and querying, in the system, a trading order set in the Down setting zone; in the case of finding an order, submitting the trade; in the case that no order is found, returning to the chain trading platform.

4. The unit trading system according to claim 2, wherein the trend determining module is further configured for monitoring a fluctuation trend and a trading traffic on the market; the fluctuation trend, the trading traffic, the trading volume, and the spread are jointly used as the pointers for submitting the trade.

5. The unit trading system according to claim 1, wherein the trending zone further comprises a Box example zone provided with reference examples.

6. The unit trading system according to claim 1, wherein the user management terminal further comprises a market drastic fluctuation processing module that merges blank orders without time to trade into one order to submit.

7. The unit trading system according to claim 1, wherein the user management terminal further includes an instruction execution control module, in which an instruction antecedent may be set, the instruction antecedent referring to a previous up trend and a down trend, or a fluctuation being greater or lower than a predetermined value.

8. The unit trading system according to claim 1, wherein the display module further comprises a bookmark for switching a trade setting interface.

9. The unit trading system according to claim 1, further comprising a continuous trade instruction setting zone.

10. The unit trading system according to claim 1, wherein in the display module, each Up setting zone corresponds to a column of trade instruction setting zones, and each Down setting zone corresponds to a column of trade instruction setting zones.

11. The unit trading system according to claim 1, wherein the Price zone includes numerical values with an interval of a same spread.

12. The unit trading system according to claim 1, wherein the trading system is applied to a circumstance of computer online trading, including foreign exchange, stock exchange, commodity exchange, futures exchange, gold exchange, or oil exchange.

13. The unit trading system according to claim 1, wherein a database of the trading system is stored at a user end.
